# EUROPEAN PATENT APPLICATION

(11) **EP 1 408 077 A1**
(43) Date of publication of application: **14.04.2004**
(21) Application number: 02022364.0
(22) Date of filing: 09.10.2002
(51) Int. Cl.: C08L 23/02, C08L 23/16, C08F 210/02

(54) **Polymer composition comprising nanofillers**

(71) Applicant: Borealis Technology Oy, 06101 Porvoo (FI)
(72) Inventor: Motha, Kshama, 00980 Helsinki (FI); Hakala, Kimmo, 00180 Helsinki (FI); Seppälä, Jukka, 00320 Helsinki (FI); Hippi, Ulla, 02920 Espoo (FI)
(74) Representative: Kador & Partner

(57) **Abstract**

A polymer composition comprising optionally a matrix polymer, a nano-filler, and a polyolefin with functional groups which has been prepared directly by polymerising olefin monomers with comonomers comprising functional groups using a single site catalyst.

## Description

The present invention relates to a polymer composition comprising a nanofiller, in particular to a polymer composition comprising optionally a matrix polymer, a nanofiller and a polyolefin with functional groups, and to the use of polyolefins with functional groups in polymer compositions comprising a nanofiller.

Reinforcement of polymers by incorporation of filler materials such as inorganic particulate and/or layered materials is known in the art. For example, as filler materials natural or synthetic clay based materials often are used. By incorporation of such filler materials into the polymer several properties of the polymer are improved such as e.g. mechanical strength and stiffness, temperature resistance, flame retardancy, and barrier properties.

In the production of the filler-containing polymer compositions, which usually are referred to as polymer-filler composites, a good dispersion of the filler particles/layers in the polymer down to nanoscopic dimensions, i.e. to the nanometer (10⁻⁹ m) level, is desirable. The expression "nanofiller" as used herein refers to substances with the ability to disperse in the matrix polymer in such a way that structures in the nanoscale (1 - 100 nm) are obtained.

For example, with clay-based layered fillers a delaminated polymer-clay nanocomposite may be obtained where single clay layers with thicknesses in the order of nanometers are dispersed in the matrix polymer, thus forming a monolithic structure on the microscale. The term "nanocomposite" describes a multiphase material where one phase is dispersed in one or more other phases at a nanometer level. To obtain such polymer nanocomposites, of course, the filler particles must be nanofillers as defined above.

A well-known method for obtaining nanofiller-containing polymers is to melt-compound the nanofiller particles with the polymer. The nanofiller, e.g. the clay, normally is pre-treated to be made organophilic. It has been found that by adding a further component which is compatible with the nanofiller, such as a polymer comprising functional groups, to the polymer composition in the melt-compounding process an improved dispersion of the nanofiller particles and/or delamination of the layers of the nanofiller in the matrix polymer is obtained. This component has therefore been denoted as compatibiliser.

For example, in nanofiller-containing olefin polymer compositions, maleic-anhydride grafted polymers are used as compatibilisers. However, in the production of such graft materials a post-reactor step - grafting - is necessary, which results in increased production costs. Furthermore, there are other drawbacks associated with these products: On the one hand, due to the grafting process, free maleic anhydride is present in the grafted polymers which has negative effects on the composites and their end-applications, and on the other hand, the occurrence of either crosslinking (PE) or chain-scission (PP) in the grafting step leads to broad property variations of the grafted polymer which also negatively affects the composites. It has further been found that oligomeric species of the grafted polymers are preferred as compatibilisers. However, due to their low molecular weight the incorporation of these oligomeric species into the polymer composition worsens mechanical, thermal, and other properties of the polymer composite.

Furthermore, it is known to prepare compatibilisers by copolymerisation of olefin monomers with comonomers containing reactive groups which after the copolymerisation step are further interconverted, e.g. to polar groups. However, also in the production of these materials a post-reactor step is necessary.

It is an object of the present invention to provide a polymer composition having improved properties such as e.g. mechanical strength and stiffness, temperature resistance, flame retardancy, and barrier properties. Furthermore it is an object of the present invention to provide such a polymer composition without the above-described drawbacks of compositions comprising known compatibilisers as e.g. grafted polymers.

The present invention is based on the finding that these objects can be achieved by a polymer composition comprising a nanofiller and a polyolefin with functional groups which has directly been prepared by using a single-site catalyst.

The present invention provides, therefore, a polymer composition comprising
(A) optionally a matrix polymer,
(B) a nanofiller, and
(C) a polyolefin with functional groups which has been prepared directly by polymerising olefin monomers with comonomers comprising functional groups using a single site catalyst.

Furthermore, the present invention provides the use of a polyolefin with functional groups which has been prepared directly by polymerising olefin monomers with comonomers comprising functional groups using a single site catalyst as a compatibiliser in a polymer composition comprising optionally a matrix polymer and a nanofiller.

In the present invention the term "prepared directly by polymerising" is used to denote that the polyolefin comprising functional groups has not been subjected to a post-reactor treatment in which the chemical nature of the functional groups is changed before incorporation into the inventive composition.

After compounding of the components of the polymer composition a nanocomposite is obtained which due to its homogeneous nature is having improved properties, in particular the thermal and mechanical properties such as higher density and crystallinity, and barrier properties of the polymer composition e.g. to moisture and gases, are improved. Furthermore, the inventive polymer composition does not have the drawbacks stated above for polymer compositions comprising conventional compatibilisers and it can be produced with reduced production costs because no post-reactor treatment step, such as grafting, of component (C) is necessary.

The functional groups in polyolefin (C) are obtained directly by polymerising olefin monomers with comonomers comprising functional groups by using a single-site catalyst, for instance a catalyst comprising a metallocene and/or a catalyst comprising a late transition metal complex such as described in WO 96/23010, WO 98/27124, WO 99/12981, WO 99/30822 and WO 01/92342. The contents of these documents is enclosed herein by reference.

The chemical nature of the functional groups in the final copolymer (C) preferably is identical to that of the functional groups as originally contained in the comonomer before the polymerisation.

It is, however, also possible that the functional groups contained in the final polyolefin (C) differ from the functional groups as originally contained in the comonomers. This may be the case if the comonomers react with the cocatalyst and/or the catalyst in the polymerisation reactor or if e.g. polar groups of the comonomer are mashed with the cocatalyst or another compound to prevent them from deactivating the catalyst during the polymerisation. However, also in these latter cases the final polyolefin (C) contains functional groups and is not subjected to any post-reactor treatment in which the chemical nature of the functional groups is changed before being incorporated into the inventive composition.

It is preferred that the comonomers comprising functional groups are alpha-olefinic compounds.

The expression "compatibiliser" as used herein refers to a compound which improves the dispersion of a nanofiller in a polymer matrix.

Polyolefin (C) should have a sufficiently high fraction of comonomer with functional groups because otherwise the copolymer does not have the compatibilising effect. On the other hand, in case the content of the functional comonomer is too high, then the miscibility with the polyolefin is likely to suffer. Furthermore, polyolefins having a high content of comonomers with functional groups have an economical disadvantage due to the high costs of such comonomers.

It is thus preferred that the fraction of the comonomers with functional groups in polyolefin (C) is from 0.05 to 10 mol%, more preferred from 0.1 to 5 mol% and still more preferred from 0.1 to 2 mol%.

Further preferred, polyolefin (C) is a polyolefin comprising polar groups which has been prepared directly by polymerising olefin monomers with comonomers comprising polar groups using a single site catalyst.

Polar groups are defined to be functional groups which comprise at least one element other that carbon and hydrogen.

Polyolefins (C) comprising polar groups are produced by direct copolymerisation of olefin monomers with polar comonomers, i.e. compounds with a polymerizable double bond and at least one functional group containing elements other that carbon and hydrogen, using a single site catalyst.

Further preferred, the polar comonomers used in the preparation of polyolefin (C) are monomers comprising a carbon-carbon double bond and an organic alcohol or acid group.

Preferably, said organic alcohol comonomers contain a double bond at one terminal of the hydrocarbon chain and a hydroxy group at the other. Preferably they contain from 6 to 18 carbon atoms, more preferably from 8 to 16 carbon atoms. A typical alcohol is 10-undecen-1-ol. If the number of carbon atoms is too low, the alcohol group may interact with the catalyst, thus reducing the activity of the catalyst.

Furthermore, said organic acids preferably contain the double bond at one terminal of the hydrocarbon chain and the acid group, preferably a carboxylic group, at the other. Preferably, they contain from 6 to 18 carbon atoms, more preferably from 8 to 16 carbon atoms. A typical carboxylic acid is 10-undecenoic acid. As already mentioned above, a too low number of carbon atoms in the molecule may result in a reduced activity in the polymerisation.

The number and nature of the olefin monomers in polyolefin (C) is in no way limited, i.e. also mixtures of olefin monomers of different nature may be used for the preparation of (C), as long as the final polyolefin comprises functional groups and has been prepared directly by polymerising said olefin monomers with comonomers comprising functional groups by using a single site catalyst. However, preferably the olefin monomers used for preparation of polyolefin (C) are alpha-olefins.

For example, it is also within this scope of the present invention to produce polyolefin (C) by polymerisation of ethylene, an alpha-olefin comonomer other than ethylene and a polar comonomer, thus obtaining a terpolymer.

Preferably, in the inventive polymer composition polyolefin (C) is a copolymer comprising ethylene and/or propylene monomers and comonomers with functional groups.

As nanofiller (B) all substances with the ability to disperse in matrix polymer (A) in such a way that structures in the nanoscale (1 - 100 nm) are obtained may be used, as well as mixtures of two or more different nanofillers.

The nanofiller may either be a clay-based compound or a submicron filler such as talc, calcium carbonate and mica, which usually have been treated, for instance, by grinding to obtain particles of small, i.e. sub-micron, dimensions.

By "clay-based compounds" any organic or inorganic material is denoted which is having a structure on the nanoscopic scale of a plurality of adjacent layers. A "sub-micron filler" is any organic or inorganic material which is present in small particles of sub-micron (10⁻⁶ m) particle size.

Preferably, nanofiller (B) is of inorganic nature.

In a preferred embodiment nanofiller (B) is a clay-based compound. Clay-based compounds upon compounding of the polymer mixture are dispersed in polymer matrix (A) so that individual platelets in the layered structure are separated or delaminated. As a consequence, the surface area of the clay in contact with the polymer is several magnitudes higher than that with conventional reinforcement fillers.

In a further preferred embodiment, nanofiller (B) is a clay-based layered inorganic, preferably silicate, material or material mixture. Useful such clay materials include natural, synthetic and modified phyllosilicates. Natural clays include smectite clays, such as montmorillonite, hectorite, mica, vermiculate, bentonite. Synthetic clays include synthetic mica, synthetic saponite, synthetic hectorite. Modified clays include fluoronated montmorillonite, fluoronated mica.

Layered silicates may be made organophilic before compounding of the polymer composition by chemical modification such as by cation exchange treatment using alkyl ammonium or phosphonium cation complexes. Such cation complexes intercalate between the clay layers.

Matrix polymer (A) optionally is present in the inventive composition, however, preferably polymer (A) mandatorily is present.

Matrix polymer (A) preferably is a polyolefin or any combination of polyolefins, such as high density polyethylene, medium density polyethylene, linear low density polyethylene, low density polyethylene, terpolymers of polyethylene with one or more alpha-olefins, polypropylene homopolymer, propylene-ethylene random copolymer, high impact propylene copolymer or polypropylene terpolymer with ethylene and other alpha-olefins.

It is preferred that matrix polymer (A) is an ethylene or propylene homo- or copolymer.

If the matrix polymer comprises polyethylene, i.e. an ethylene homo- or copolymer, the MFR₂ (melt flow rate measured at 190°C and 2.16 kg, in accordance with ISO 1133) for such a polyethylene preferably is from 0.01 to 100 g/10 min. The comonomer and termonomer contents for such a polyethylene preferably is from 0 to 15 wt.%.

In case the matrix polymer comprises polypropylene, i.e. a propylene homo- or copolymer, the MFR₂ (melt flow rate measured at 230°C and 2.16 kg, in accordance with ISO 1133) for such a polypropylene preferably is from 0.1 to 100 g/10min. The comonomer and termonomer contents for such a polypropylene is from 0 to 30 wt.%.

The density ranges for both polyethylene and polypropylene preferably is from 890 to 965 kg/m³.

Preferably, in the inventive polymer composition polyolefin (C) is present in an amount of 1 to 99 wt%, more preferred of 5 to 50 wt% and still more preferred of 4 to 10 wt% of the total composition.

Further preferred, in the polymer composition nanofiller (B) is present in an amount of 1 to 15 wt%, more preferred of 2 to 10 wt% and still more preferred of 4 to 10 wt% of the total composition.

Still further preferred, in the polymer composition matrix polymer (A) is present in amount of up to 98 wt%, more preferred from 40 to 93 wt% and still more preferred from 80 to 92 wt% of the total composition.

In addition to the components as mentioned, the polymer composition may include conventional additives and fillers known in the art, such as flame retardants, reinforcing fillers, antioxidants, process stabilisers, etc.. Also, the polymer composition of the present invention may be blended with other polymers.

The inventive polymer composition may be used among others in products produced in extrusion, moulding, film, and thermoforming processes.

The components may be mixed in any compounding or mixing device known in the art.

It is also within the scope of the invention first to produce a masterbatch of the components of the inventive polymer composition and subsequently to blend this masterbatch with a further polymer. In this case, the content of the nanofiller in the masterbatch may be significantly higher than the preferred ranges for the amount of nanofiller as given for the total composition, i.e. preferably up to 80 wt%, more preferably up to 50 wt% of the masterbatch. In the final polymer composition, comprising a blend of the masterbatch and the further polymer, to be used in the end-use applications the amount of nanofiller, however, preferably is in the above given preferred ranges.

### Examples

In the following examples, four polymer compositions have been prepared and tested:
1) a pure low density polyethylene (LDPE) with an MFR₂ of 2.1 and density of 922 kg/m³,
2) a composition comprising low density polyethylene (LDPE) with an MFR₂ of 2.1 and density of 922 kg/m³ and a clay-based nanofiller,
3) a composition comprising low density polyethylene (LDPE) with an MFR₂ of 2.1 and density of 922 kg/m³, a clay-based nanofiller and a commercial maleic anhydride (MAH)-grafted PE, and
4) a composition comprising low density polyethylene (LDPE) with an MFR₂ of 2.1 and density of 922 kg/m³, a clay-based nanofiller and a polyolefin comprising functional groups which has been produced by using a single site catalyst.

The maleic anhydride containing polymer was Fusabond MX110D, marketed and sold by DuPont, with an MFR₂ of 15 g/10 min.

The polyolefin comprising functional groups of composition 4) was prepared as follows:

7.5 mmol of 10-undecen-1-ol was introduced into a polymerisation reactor of 1.0 dm³ volume, containing 600 cm³ of moisture-free toluene and methylaluminoxane (10 % by weight in toluene) corresponding to 30 mmol aluminium at a temperature of 80°C. Thus, the molar ratio of aluminium to comonomer was 4. The mixture was stirred for 15 minutes, during which period the pressure of the reactor was increased to 1.5 bar (gauge pressure) with ethylene and the solution was allowed to saturate with ethylene while keeping the temperature constant at 80°C.

The copolymerisation was initiated by introducing 5.0 µmol of rac-ethylenebisindenyl-zirconiumdichloride dissolved in moisture-free toluene into the reactor. During the polymerisation ethylene was continously introduced into the reactor to maintain the total pressure at 1.5 bar. The reaction was terminated after 15 minutes and the copolymer was precipitated by adding a solution of hydrochloric acid in ethanol. The polymer was filtered and washed with ethanol and acetone. The polymer yield was 19.3 grams. The content of 10-undecen-1-ol units in the final polymer was 0.28 % by mole (measured by ¹H NMR). The polymer had a weight average molecular weight of 52700 g/mol (measured by GPC, as polyethylene equivalent), melting point of 131°C (measured by DSC, second heating 10°C/min) and crystallinity of 65 % (measured by DSC).

The nanofiller used was Cloisite 6 A from Southern Clay Products. This is a montmorillonite-based organoclay.

The nanocomposites were produced by compounding compositions 2) to 4) i.e. the LDPE polymer, nanofiller, and, optionally, the compatibiliser in a corotating twin-screw extruder. For stabilisation, 0.1 wt.% of Irganox 1010 was added. The extruder has a total volume of 16 cm³ and a screw length of 150 mm. The mixing temperature was 170°C and the screw speed was 65 rpm. After 3 minutes of mixing, the blend was injection moulded with a mini-injection moulding machine into tensile test bars.

Some of the blend was collected as strands and made into relevant test samples for other property tests. The tests were performed according to the following standards:
Melt flow rate MFR₂ - ISO 1133
Oxygen permeability - ASTM D 3985
Moisture permeability - ASTM F 1249
Vicat softening point - ISO 306
Hardness, shore D - ISO 868
Tensile properties - ISO 527, specimen type 1BA, except thickness of 1.5 mm instead of 2 mm.

The test results are shown in Table 1.

With regard to mechanical properties, though the pure polymer has higher values for tensile strength, a high standard deviation was observed. The formulation without compatibiliser is clearly worse. Comparing compounded composition 3) with compounded composition 4), the modulus of the latter is lower, however, elongation at break is higher, these results together with tensile strength data indicate that compounded composition 4) has better toughness. All other properties of compounded composition 4) are improved or on the same level as that of compounded composition 3).

These properties are Vicat softening point, hardness, oxygen and moisture barrier properties.

It is to be noted that the polyolefin with functional groups as used in composition 4) has a lower content of functional groups and would thus be expected to give poorer performance than the MAH grafted polyolefin used in composition 3).

**Table 1:**

| | compos. 1 | compos. 2 | compos. 3 | compos. 4 |
|---|---|---|---|---|
| formulation | Pure LDPE | LDPE + 5 wt% clay nanofiller | LDPE + 10 wt% Grafted MAHPE + 5 wt% clay nanofiller | LDPE + 10 wt% Func. PO + 5 wt% clay nanofiller |
| functional group content in compatibiliser, mol.% | | | 0.4 | 0.28 |
| molecular weight of compatibiliser, g/mol | | | 41500 | 52700 |
| melting point of compatibiliser | | | 120 | 131 |
| crystallinity of compatibiliser, wt.% | | | 53 | 65 |
| | | | | |

| **nanocomposite properties** | | | | |
|---|---|---|---|---|
| tensile modulus, MPa | 81 (high deviation) | 69 | 88.5 | 79 |
| tensile strength, MPa | 18.7 (15.5 - 20.5) | 13 | 15.9 | 14.6 |
| elongation at break, % | 98 | 133 (high deviation, 88 -189) | 96 | 140 |
| vicat Pt. °C | 93 | 89 | 91 | 92 |
| hardness, Shore D | 46 | 32 | 45 | 48 |
| oxygen permeability, cc*25micr/m²*24h*bar | 7187 | 3735 | 3603 | 2854 |
| water vapour permeability, g*25micr/m²*24h | 2.3 | 2.1 | 2.1 | 1.6 |
| melting point (°C) | 110 | 110 | 111 | 109 |
| crystallinity | 40.6 | 40.4 | 41 | 42.5 |

## Claims

1. A polymer composition comprising
(A) optionally a matrix polymer,
(B) a nanofiller, and
(C) a polyolefin with functional groups which has been prepared directly by polymerising olefin monomers with comonomers comprising functional groups using a single site catalyst.

2. A polymer composition according to claim 1, wherein the fraction of the comonomers with functional groups in polyolefin (C) is from 0.05 to 10 mol%, preferably from 0.1 to 5 mol% and still more preferred from 0.1 to 2 mol%.

3. A polymer composition according claims 1 or 2, wherein polyolefin (C) is a polyolefin with polar groups.

4. A polymer composition according to claim 3, wherein the polar comonomers used in the preparation of polyolefin (C) are monomers comprising a carbon-carbon double bond and an organic alcohol or acid group.

5. A polymer composition according to claim 4, wherein said comonomers comprise from 6 to 18 carbon atoms, and more preferably from 8 to 16 carbon atoms.

6. A polymer composition according to any of the preceding claims, wherein polyolefin (C) is a copolymer comprising ethylene and/or propylene monomers and comonomers with functional groups.

7. A polymer composition according to any of the preceding claims, wherein nanofiller (B) is a clay-based layered material.

8. A polymer composition according to any of the preceding claims, wherein matrix polymer (A) is a polyolefin.

9. A polymer composition according to claim 8, wherein matrix polymer (A) is an ethylene or propylene homo- or copolymer.

10. A polymer composition according to any of the preceding claims, wherein polyolefin (C) is present in an amount of 1. to 99 wt%, preferably of 5 to 50 wt% and still more preferred of 4 to 10 wt% of the total composition.

11. A polymer composition according to any of the preceding claims, wherein nanofiller (B) is present in an amount of 1 to 15 wt%, preferably of 2 to 10 wt% and still more preferred of 4 to 10 wt% of the total composition.

12. A polymer composition according to any of the preceding claims, wherein the matrix polymer (A) is present in amount of up to 98 wt%, preferably from 40 to 93 wt% and still more preferred from 80 to 92 wt% of the total composition.

13. Use of a polyolefin with functional groups which has been prepared directly by polymerising olefin monomers with comonomers comprising functional groups using a single site catalyst as a compatibiliser in a polymer composition comprising optionally a matrix polymer and a nanofiller.
